Europäisches Patentamt

European Patent Office

Office européen des brevets

(11) Numéro de publication: **0 423 024 A1**

# DEMANDE DE BREVET EUROPEEN

(21) Numéro de dépôt: 90402818.0

(22) Date de dépôt: **10.10.90**

(51) Int. Cl.⁵: **B29C 33/40**, B29C 39/42, B22C 9/04

(30) Priorité: **11.10.89 FR 8913255**

(43) Date de publication de la demande:
**17.04.91 Bulletin 91/16**

(84) Etats contractants désignés:
**AT BE CH DE ES FR GB IT LI SE**

(71) Demandeur: **SOCIETE NATIONALE D'ETUDE ET DE CONSTRUCTION DE MOTEURS D'AVIATION, "S.N.E.C.M.A."
2, Boulevard du Général Martial Valin**

**F-75015 Paris(FR)**

(72) Inventeur: **Doutre, Françoise
72, avenue Jean Jaurès
F-95100 Argenteuil(FR)**

(74) Mandataire: **Moinat, François et al
S.N.E.C.M.A. Service des Brevets Boîte
Postale 81
F-91003 Evry Cédex(FR)** .

(54) Procédé de fabrication de moules.

(57) Un moule-type utilisé en fonderie de précision pour les études hydrodynamiques des conditions de remplissage des moules de fabrication est fabriqué selon le procédé suivant :
- mise en place d'un modèle en cire des pièces dans un caisson en matériau transparent ;
- enrobage par dépôt de strates d'un matériau transparent du type résine silicone suivi d'un dégazage et polymérisation ;
- dissolution du modèle.

FIG:1

EP 0 423 024 A1

La présente invention concerne un procédé de fabrication de moules transparents utilisables pour réaliser des études hydrodynamiques de remplissage de moule en fonderie de précision.

La mise au point d'opérations de coulée en fonderie de pièces précises, telles que les pièces destinées aux applications aéronautiques et notamment des pièces en superalliage pour moteurs aéronautiques, nécessite des études de simulation par calcul numérique des conditions de remplissage des moules.

Les techniques de fonderie à la cire perdue sont bien connues en soi. On rappelle que ce procédé comporte notamment les étapes suivantes :

- réalisation d'un modèle, généralement en cire, de la pièce à réaliser,
- dépôt sur le modèle d'une suspension de céramiques à partir d'une barbotine épaisse,
- dépot de grains de céramique en stucco,
- séchage, par exemple en étuve, entraînant une élimination du solvant de la suspension et une consolidation de la couche,
- dépôt d'une nouvelle couche de suspension de céramiques à partir d'une barbotine fluide,
- nouveau dépôt de grains de céramique en stucco,
- séchage, comme précédemment,
- les couches sont renouvelées éventuellement autant de fois que de nouveaux éléments doivent être introduits en vue d'obtenir les caractéristiques recherchées dans l'application particulière, qu'elles soient de nature physique, chimique ou mécanique,
- traitement thermique de l'ensemble obtenu dans des conditions déterminées, adaptées aux compositions et produits utilisés, conduisant à l'élimination du modèle organique et à une "cuisson" du moule avec une consolidation notamment par frittage éventuellement réactif,
- réalisation d'une opération de coulée de pièce dans le moule obtenu.

Un des buts de l'invention est de modifier ce procédé connu pour permettre la fabrication d'un moule-type adapté à l'utilisation annoncée ci-dessus. Le procédé de fabrication d'un moule-type conforme à l'invention et remplissant ces conditions est caractérisé en ce qu'il comporte les étapes successives suivantes :

a) - réalisation d'une grappe de modèles, notamment en cire, des pièces à réaliser ;

b) - mise en place dudit modèle obtenu à l'étape précédente (a) dans un caisson réalisé en un matériau de résistance adéquate et transparent du type polyméthacrylate ;

c) - enrobage dudit modèle dans son caisson obtenu à l'étape (b) par dépôt d'une couche d'un matériau polymérisable transparent du type résine à base de silicone ;

d) - opération de dégazage sous vide ;

e) - répétition itérative des étapes (c) et (d) précédentes de manière à obtenir un enrobage par strates successives, le dégazage assurant à chaque couche le débullage et la parfaite imprégnation de ladite résine autour du modèle ;

f) - opération de polymérisation de ladite résine effectuée à vitesse lente et à une température compatible avec la bonne tenue mécanique et l'état de surface du modèle en cire ;

g) - élimination du modèle en cire par dissolution dans de l'eau acidulée.

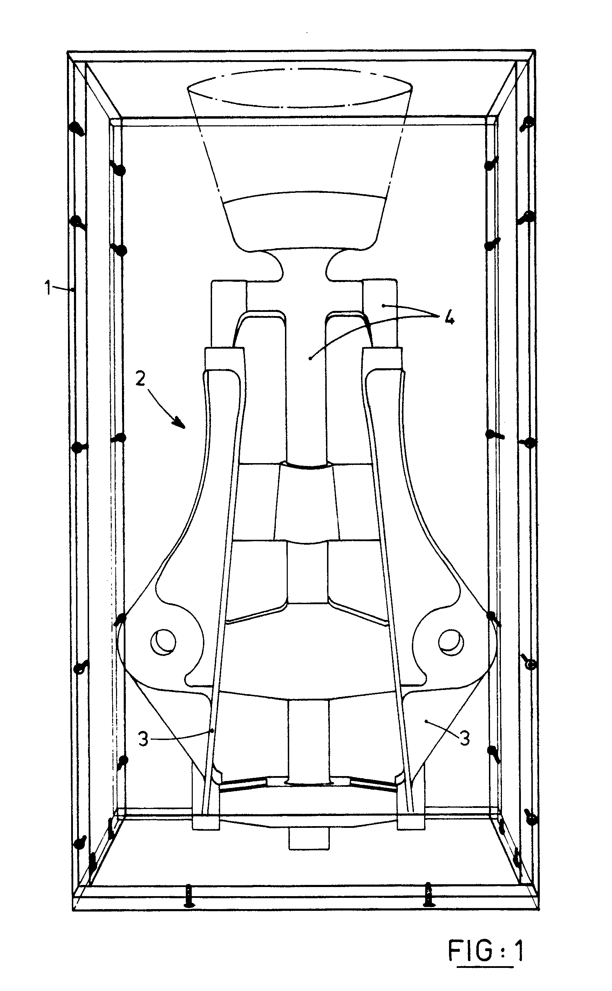

D'autre caractéristiques et avantages de l'invention seront mieux compris à la lecture de la description qui va suivre d'un exemple non limitatif de réalisation illustrant l'invention, en référence au dessin annexé sur lequel la figure 1 représente une vue de face d'un moule-type après décirage prêt à l'utilisation et obtenu par le procédé de fabrication conforme à l'invention.

## EXEMPLE

Pour la mise en oeuvre du procédé de fabrication d'un moule transparent conforme à l'invention, la première étape (a) de confection d'une grappe de modèles en cire soluble est identique à celle qui est effectuée lors de la mise en production des pièces pour lesquelles on veut étudier les conditions de remplissage de moule. Les modèles de pièces ainsi que les appendices nécessaires peuvent ainsi être obtenus par injection puis on procède à leur assemblage. La deuxième étape (b) consiste à mettre en place la grappe obtenue dans un caisson transparent, préalablement réalisé en un matériau du type polyméthacrylate.

Au cours de l'étape suivante (c), une résine transparente, par exemple à base de silicone, est déposée sur le modèle sous forme de strates. Dans l'exemple de mise en oeuvre réalisé, les strates successives ont une hauteur de 5 à 10cm. Pour obtenir une épaisseur suffisante, 5 à 8 strates superposées sont ainsi déposées pour obtenir l'enrobage du modèle. Chaque dépôt de couche est suivi d'une opération de dégazage sous vide d'une durée de 1 à 2 heures effectuée à la température ambiante, afin d'obtenir le débullage et une parfaite imprégnation de la résine autour du modèle.

Un exemple de résine utilisée est la résine silicone commercialisée sous la désignation RTV141 par la société RHONE-POULENC, cette résine ayant la propriété de polymériser à froid et sans retrait.

Lorsqu'une épaisseur suffisante d'enrobage du modèle en cire est obtenue, on procède à la polymérisation de la résine qui procure le durcissement du moule. Les conditions de polymérisation, notamment la température et la durée correspondante, sont déterminées pour rester compatibles avec la bonne tenue mécanique et l'état de surface des modèles en cire. Dans l'exemple réalisé, un durcissement complet a ainsi été obtenu au bout de 24 heures à la température ambiante.

Enfin, pour achever la fabrication du moule, on procède à l'élimination du modèle en cire par simple dissolution dans de l'eau acidulée.

Le moule obtenu est parfaitement transparent. La figure 1 montre ainsi dans un caisson 1 un moule-type 2 après décirage comportant des parties 3 représentatives des pièces à réaliser en fonderie par coulée dans un moule analogue et des canaux 4 d'arrivée et d'amenée correspondant dans le moule de fabrication des pièces au passage du métal liquide.

Le moule-type 2 ainsi obtenu est notamment utilisé pour simuler la coulée du métal dans le moule correspondant de fabrication des pièces. Un liquide coloré étant utilisé à la place du métal, le moule 1 transparent permet de visualiser les conditions de remplissage du moule. Pour effectuer ces études hydrodynamiques avec simulation des écoulements, des turbulences etc..., le moule transparent peut notamment être associé à des moyens d'enregistrement vidéo.

**Revendications**

1. Procédé de fabrication d'un moule-type utilisé pour les études hydrodynamiques des conditions de remplissage d'un moule de fabrication en fonderie de précision caractérisé en ce qu'il comporte les étapes successives suivantes:

a) - réalisation d'une grappe de modèles, notamment en cire, des pièces à réaliser ;

b) - mise en place dudit modèle obtenu à l'étape précédente (a) dans un caisson réalisé en un matériau de résistance adéquate et transparent du type polyméthacrylate ;

c) - enrobage dudit modèle dans son caisson obtenu à l'étape (b) par dépôt d'une couche d'un matériau polymérisable transparent du type résine à base de silicone ;

d) - opération de dégazage sous vide ;

e) - répétition itérative des étapes (c) et (d) précédentes de manière à obtenir un enrobage par strates successives, le dégazage assurant à chaque couche le débullage et la parfaite imprégnation de ladite résine autour du modèle ;

f) - opération de polymérisation de ladite résine effectuée à vitesse lente et à une température compatible avec la bonne tenue mécanique et l'état de surface du modèle en cire ;

g) - élimination du modèle en cire par dissolution dans de l'eau acidulée.

2. Procédé de fabrication d'un moule-type selon la revendication 1 dans lequel 5 à 8 strates successives de résine sont déposées et l'opération de dégazage de chaque couche dure de 1 à 2 heures, à température ambiante.

3. Procédé de fabrication d'un moule-type selon l'une des revendications 1 ou 2 dans lequel l'opération de polymérisation est effectuée à la température ambiante durant 24 heures.

FIG : 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| P,X | FONDERIE - FONDEUR D'AUJOURD'HUI, no. 92, février 1990, pages 21-28, Paris, FR; P. HAIRY et al.: "Remplissage des coquilles"<br>* Page 21, introduction, analogie hydraulique; page 22, paragraphe 1.2.2, le moulage * | 1-3 | B 29<br>C 33/40<br>B 29 C 39/42<br>B 22 C 9/04 |
| Y | FOUNDRY TRADE JOURNAL, 15 janvier 1953, pages 63-69; G. MARTIN: "Principles of gating"<br>* Page 63, colonne de gauche, alinéas 1,2,3 * | 1 | |
| Y | FR-A-2 342 834   (HELIOS-APPARATEBAU KG MULLER & CO.)<br>* Figures 1-6; page 3, ligne 22 - page 4, ligne 17 * | 1 | |
| A | CH-A-6 393 11   (WERKZEUGMASCHINENFABRIK OERLIKON-BÜHRLE AG)<br>* Revendication 1; figures 1,2 * | 2 | |

| | DOMAINES TECHNIQUES RECHERCHES (Int. Cl.5) |
|---|---|
| | B 29 C<br>B 22<br>C |

Le présent rapport de recherche a été établi pour toutes les revendications

| Lieu de la recherche | Date d'achèvement de la recherche | Examinateur |
|---|---|---|
| La Haye | 17 janvier 91 | MAILLIARD A.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&: membre de la même famille, document correspondant